# EUROPÄISCHE PATENTSCHRIFT

(11) **EP 4 010 178 B1**
(45) Veröffentlichungstag und Bekanntmachung des Hinweises auf die Patenterteilung: **31.12.2025**
(21) Anmeldenummer: 20758093.7
(22) Anmeldetag: 06.08.2020
(51) Int. Cl.: B29C 73/10, B29C 73/04

(54) **VERFAHREN ZUM REPARIEREN EINES FASERVERBUNDBAUTEILS**
METHOD FOR REPAIRING A FIBRE COMPOSITE COMPONENT
MÉTHODE DE RÉPARATION D'UN COMPOSANT COMPOSITE EN FIBRES

(30) Priorität: 07.08.2019 DE 102019121357
(43) Veröffentlichungstag der Anmeldung: 15.06.2022
(73) Patentinhaber: Airbus Defence and Space GmbH, 82024 Taufkirchen (DE); Airbus Operations GmbH, 21129 Hamburg (DE)
(72) Erfinder: HOLZHÜTER, Dirk, 38110 Braunschweig (DE); KOSMANN, Jens, 38116 Braunschweig (DE); KÖRWIEN, Thomas, 85635 Höhenkirchen (DE); MAIER, Anton, 84076 Pfeffenhausen (DE); KRUSE-STRACK, Thomas, 29320 Herrmannsburg (DE)
(74) Vertreter: Gramm, Lins & Partner Patent- und Rechtsanwälte PartGmbB
(86) Internationale Anmeldenummer: PCT/EP2020/072165
(87) Internationale Veröffentlichungsnummer: WO 2021/023829

(56) Entgegenhaltungen:
- EP-A2- 0 258 596
- WO-A1-2017/081456
- DE-A1- 102013 209 179

## Beschreibung

Die Erfindung betrifft ein Verfahren zum Reparieren einer Schadstelle eines Faserverbundbauteils, welches aus mindestens einer Faserlage eines Fasermaterials eines Faserverbundwerkstoffes und einem das Fasermaterial einbettenden Matrixmaterial des Faserverbundwerkstoffes gebildet bzw. hergestellt ist.

Aufgrund der gewichtsspezifischen Festigkeit und Steifigkeit sind Faserverbundbauteile, die aus einem Faserverbundwerkstoff hergestellt sind, heute kaum mehr wegzudenken. Faserverbundwerkstoffe, aus denen derartige Faserverbundbauteile hergestellt werden können, weisen dabei in der Regel zwei wesentliche Hauptbestandteile auf, nämlich zum einen ein Fasermaterial und zum anderen ein das Fasermaterial einbettendes Matrixmaterial. Das Fasermaterial verleiht dem aus einem solchen Faserverbundwerkstoff hergestellten Faserverbundbauteil im Wesentlichen seine lasttragenden Eigenschaften in Richtung der Verstärkungsfaser. Durch Aushärten des das Fasermaterial einbettenden Matrixmaterials werden die Verstärkungsfasern in die vorgegebene Lastrichtung gezwungen und bilden so zusammen mit dem Matrixmaterial eine integrale Einheit.

Nicht nur bei großskaligen bzw. großflächigen Faserverbundbauteilen werden diese aus mehreren Faserlagen des Fasermaterials schichtweise in Art eines Laminates aufgebaut, wobei die Richtungen der Verstärkungsfasern sich von Faserlage zu Faserlage unterscheiden können. Durch den lagenförmigen Aufbau eines Faserlaminates kann in der Bauteilebene eine isotrope Werkstoffeigenschaft angenähert werden, da die Richtung der Verstärkungsfasern nunmehr entsprechend den jeweiligen Faserlagen variiert. Es können aber auch gezielt anisotrope Werkstoffeigenschaften definiert werden.

Nachdem das Faserlaminat als Faserpreform aus den einzelnen Faserlagen des Fasermaterials gebildet wurde, wird das das Fasermaterial einbettende Matrixmaterial meist unter Temperierung und Druckbeaufschlagung ausgehärtet, so dass Fasermaterial und Matrixmaterial eine integrale Einheit bilden. Hierbei können trockene Fasermaterialien verwendet werden, die zu einem späteren Zeitpunkt noch mit dem Matrixmaterial infundiert werden müssen. Es sind aber auch vorimprägnierte Fasermaterialien, sogenannte Prepregs, bekannt, bei denen das Matrixmaterial bereits vor der Bildung des Faserlaminats bzw. der Faserpreform in das Fasermaterial eingebracht wurde.

Bei der Verwendung von Faserverbundbauteilen an exponierten Stellen, wie beispielsweise als Hülle für Verkehrsflugzeuge, oder auch an anderen Stellen wird es häufig notwendig, das im Betrieb befindliche Faserverbundbauteil zu reparieren, wenn es eine Schadstelle aufweist. Eine solche Schadstelle kann beispielsweise durch die Einwirkung eines Objektes auf das Faserverbundbauteil mit einer gewissen Kraft entstehen. Eine solche Schadstelle kann neben der Beschädigung der Verstärkungsfasern einer oder mehrerer Faserlagen des Faserverbundbauteils auch die Phänomene aufweisen, bei denen sich einzelne Faserlagen voneinander lösen und nicht mehr durch das ausgehärtete Matrixmaterial zusammengehalten werden.

Aus der DE 10 2011 056 088 A1 ist beispielsweise ein Verfahren zum Reparieren einer Schadstelle eines Faserverbundbauteils bekannt, wobei hierbei im Bereich der Schadstelle eine Schäftung in das Faserverbundbauteil eingebracht wird, um zunächst die beschädigten Fasermaterialien aus dem Faserverbundbauteil zu entfernen. Anschließend werden Z-Stifte im Bereich der Schäftung eingesetzt. Um diese Z-Stifte werden nun Reparaturfaserhalbzeuge drapiert, die in die Schäftung eingebracht und somit den beschädigten Bereich des Faserverbundbauteils ausfüllen sollen. Die Z-Stifte sollen dabei eine größtmögliche Stabilität und Steifigkeit der reparierten Stelle erzeugen.

Ein ähnliches Reparaturverfahren ist auch aus der US 5,868,886 bekannt, bei dem im Bereich der zu reparierenden Schadstelle Z-Stifte mithilfe von Ultraschall in die bestehende Basisstruktur des Faserverbundbauteils hineingetrieben werden.

Bei der Reparatur derartiger Schadstellen durch entsprechende Reparaturfaserhalbzeuge werden in der Regel Faserhalbzeuge verwendet, die den Faserhalbzeugen, die für die Herstellung des Faserverbundbauteils verwendet wurden, entsprechen. Es hat sich jedoch gezeigt, dass hierbei große Welligkeiten an der Bauteiloberfläche entstehen und darüber hinaus die Reparaturstelle an ihrer Oberfläche meist nicht bündig abschließt, was darauf zurückzuführen ist, dass die an der Reparaturstelle eingesetzten Reparaturfaserhalbzeuge anders als bei der Herstellung des gesamten Faserverbundbauteils nicht so mit einem Druck beaufschlagt werden können, dass das Faservolumengehalt dem Faservolumengehalt des übrigen Faserverbundbauteils entspricht. Denn durch die Verwendung eines Druckofens (Autoklaven) kann von außen bei der Herstellung des Faserverbundbauteils ein Druck auf die Oberfläche des Faserverbundbauteils aufgeprägt werden, der zu einem Zusammenpressen der Faserlagen führt und hierdurch den Faservolumengehalt steigert. Bei der Reparatur müssten die verwendeten Reparaturfaserhalbzeuge in gleicher oder ähnlicher Art und Weise mit einem Druck beaufschlagt werden, was angesichts der Faserverbundstruktur nur schwerlich möglich ist.

Des Weiteren hat sich gezeigt, dass durch eine große Einzellagendicke sich Reinharz- bzw. Klebstoffbereiche ausbilden, die nicht zur Festigkeit beitragen und typischerweise Bereiche bilden, in denen es zu einem verfrühten Versagen kommt.

Aus der WO 2017/081456 A1 ist ein Verfahren zur Reparatur eines aus mehreren Lagen gebildeten Faserverbundbauteils bekannt, wobei zunächst in dem zu reparierenden Bereich eine Reparaturkavität erzeugt wird. Diese Reparaturkavität wird durch Wegnahme von Material im geschädigten Bereich durch Schäftung erzeugt.

Es ist daher Aufgabe der vorliegenden Erfindung ein verbessertes Verfahren zum Reparieren einer Schadstelle eines Faserverbundbauteils anzugeben, bei dem die reparierte Schadstelle eine ähnliche Festigkeit und Steifigkeit aufweist wie das übrige Faserverbundbauteil und darüber hinaus Welligkeiten an der Oberfläche der reparierten Schadstelle sowie Aufdickungen im Bereich der Schadstelle vermieden werden können.

Die Aufgabe wird mit dem Verfahren gemäß Anspruch 1 erfindungsgemäß gelöst. Gemäß Anspruch 1 wird ein Verfahren zum Reparieren einer Schadstelle eines Faserverbundbauteils vorgeschlagen, wobei das Faserverbundbauteil aus einem Faserverbundwerkstoff hergestellt ist. Der Faserverbundwerkstoff weist gattungsgemäß ein Fasermaterial und ein Matrixmaterial auf, wobei das Fasermaterial in Form von Fasereinzellagen bereitgestellt wurde. Das Faserverbundbauteil ist demzufolge aus mindestens einer solchen Faserlage des Fasermaterials durch Aushärten des das Fasermaterial einbettenden Matrixmaterials hergestellt. In der Regel wird das Faserverbundbauteil jedoch eine Mehrzahl von Einzelfaserlagen aufweisen, die schichtweise bzw. lagenweise übereinander angeordnet werden.

Gattungsgemäß umfasst dabei das Verfahren zunächst den Schritt des Entfernens der Schadstelle aus dem Faserverbundbauteil, indem eine Reparaturkavität in dem Faserverbundbauteil hergestellt wird. Dies kann gemäß einer Ausführungsform in Form einer Schäftung erfolgen, bei der die Ränder der Reparaturkavität in Richtung Grund der Kavität abgeschrägt sind.

Anschließend wird mindestens eine Reparaturfaserlage eines Fasermaterials in die hergestellte Reparaturkavität des Faserverbundbauteils eingebracht und anschließend das das Fasermaterial einbettende Matrixmaterial konsolidiert (bspw. ausgehärtet). Das Matrixmaterial kann dabei dasselbe Matrixmaterial sein, welches auch zur Herstellung des Faserverbundbauteils verwendet wurde. Denkbar ist aber auch, dass ein anderes Matrixmaterial verwendet wird, das beispielsweise bei geringeren Temperaturen aushärtet.

Das Einbringen der Reparaturfaserlagen kann bspw. durch Verwendung eines zusätzlichen Klebstoffes erfolgen. Die Reparaturfaserlagen werden dann in die Reparaturkavität eingeklebt bzw. miteinander verklebt. Der Klebstoff kann dabei gleiche Eigenschaften wie das verwendete Matrixmaterial aufweisen oder andere Eigenschaften, um die Reparatur an vorherrschende Bedingungen anpassen zu können.

Demzufolge kann das Faserverbundbauteil an sich aus einem ersten Faserverbundwerkstoff aufweisend ein erstes Fasermaterial und ein erstes Matrixmaterial hergestellt sein, während für die Reparatur ein zweiter Faserverbundwerkstoff aufweisend ein zweites Fasermaterial und ein zweites Matrixmaterial verwendet wird. Dabei können das erste Matrixmaterial und das zweite Matrixmaterial gleich sein oder sich voneinander unterscheiden.

Erfindungsgemäß ist nun vorgesehen, dass mindestens eine Reparaturfaserlage in die Reparaturkavität eingebracht wird, deren Lagendicke kleiner ist als die Lagendicke der Faserlagen des übrigen Faserverbundbauteils. Demzufolge unterscheiden sich die Faserlagen des Faserverbundbauteils des ersten Faserverbundwerkstoffes von den Faserlagen des Fasermaterials des zweiten Faserverbundwerkstoffes hinsichtlich der Lagendicke derart, dass die Lagendicke der Reparaturfaserlagen kleiner ist als die Lagendicke des Fasermaterials des Faserverbundbauteils. Dabei können unterschiedliche Lagendicken verwendet werden. Die Reparaturfaserlagen können dabei alle die gleiche Lagendicke aufweisen, es kann nur ein Teil der Reparaturfaserlagen die gleiche Lagendicke aufweisen oder alle Reparaturfaserlagen haben eine voneinander verschiedene Lagendicke.

Aufgrund der Tatsache, dass der Lagenaufbau bei einer derartigen Reparatur innerhalb der Reparaturkavität nicht mehr dem Lagenaufbau des Faserverbundbauteils im Original entspricht, kann das Reparaturpatch, welches sich innerhalb der Reparaturkavität befindet, viel genauer und flexibler an die vorherrschenden Bedingungen angepasst werden. Es hat sich dabei gezeigt, dass durch die Verwendung von Reparaturfaserlagen, deren Lagendicke kleiner ist als die Lagendicke der Faserlagen des übrigen Faserverbundbauteils, eine bessere Anpassung der Reparatursteifigkeit erreicht werden kann, ohne dass die lasttragenden Eigenschaften des gesamten Bauteils beeinträchtigt werden. An den Rändern der Reparaturkavität bilden sich nunmehr wesentlich kleinere Harznester und Klebstoffnester aus, wodurch sich eine höhere Reparatursteifigkeit ergibt.

Es hat sich des Weiteren gezeigt, dass die Oberflächenwelligkeit durch die Verwendung von Reparaturfaserlagen mit einer geringeren Lagendicke reduziert werden kann, was sich insbesondere bei laminar umströmbaren Strömungsoberflächen besonders vorteilhaft auswirkt. Aufgrund der reduzierten Welligkeit wird darüber hinaus die Druckfestigkeit vergrößert. Durch die Verwendung von Reparaturfaserlagen, deren Lagendicke kleiner ist als die Lagendicke der Faserlagen, können Spannungskonzentrationen an den Ausläufern der Lagen (Original ist verschliffen, Reparatur ist diskret) reduziert werden. Denn die Reparaturkavität ist in der Regel geschäftet, während die Reparaturfaserlagen stufenförmig vorliegen. Durch die geringere Lagendicke werden Spannungskonzentrationen aufgrund der Stufenreparatur reduziert.

Außerdem können an einer Faserlage des Faserverbundbauteils mehrere Reparaturfaserlagen mit lastoptimierter Lagenorientierung angekoppelt werden, wodurch die mechanischen Eigenschaften der Reparatur verbessert werden. Die geringere Einzelschichtdicke reduziert dabei die lokale Klebstoffbelastung und erhöht somit die Verbindungsfestigkeit. Die Schadenstoleranz ist aufgrund der größeren Interfacefläche höher. Fertigungsbedingte Variationen in den Überlappungslängen können durch den Einsatz von Reparaturfaserlagen mit geringeren Lagendicke ausgeglichen und kompensiert werden.

Gemäß einer Ausführungsform wird die Reparaturkavität in dem Faserverbundbauteil durch Bildung einer Schäftung im Bereich der Schadstelle hergestellt.

Durch die Schäftung wird eine Art konisch in Richtung Faserverbundbauteil verlaufende Reparaturkavität erzeugt, in die dann lagenweise die einzelnen Reparaturlagen eingelegt werden.

Gemäß einer Ausführungsform hierzu werden die Reparaturfaserlagen treppenförmig in der Reparaturkavität angeordnet, so dass die auf eine erste Reparaturfaserlage aufgelegte zweite Reparaturfaserlage eine größere Ausdehnung und wenigstens eine andere Richtung hat als die darunterliegende erste Reparaturfaserlage. Demzufolge bildet ein Lagenaufbau aus Reparaturfaserlagen an den Lagenenden (Lagenausläufer) eine stufen- oder treppenförmige Geometrie, die nicht der Geometrie der Reparaturkavität entspricht. Durch die Reduzierung der Einzelschichtdicke der Reparaturfaserlagen werden die negativen Eigenschaften der stufen- oder treppenförmige Geometrie in den Randbereichen reduziert.

Gemäß einer Ausführungsform sind alle in die Reparaturkavität eingebrachten Reparaturfaserlagen derart ausgebildet, dass sie eine Lagendicke aufweisen, die kleiner ist als die Lagendicke der Faserlagen des übrigen Faserverbundbauteils. Dabei können unterschiedliche Lagendicken verwendet werden.

Hierdurch wird sichergestellt, dass die Anzahl der Reparaturfaserlagen in der Reparaturkavität größer ist als die Anzahl der Faserlagen des Faserverbundbauteils, die durch Herstellung der Reparaturkavität durchtränkt und somit betroffen sind.

Gemäß einer weiteren Ausführungsform ist die mindestens eine Reparaturfaserlage mit einem Matrixmaterial bereits vorimprägniert. Mit anderen Worten, bei mindestens einer Reparaturfaserlage, vorzugsweise bei allen Reparaturfaserlagen, deren Lagendicke kleiner ist als die Lagendicke der Faserlagen des übrigen Faserverbundbauteils, handelt es sich um ein sogenanntes Prepregmaterial. Denkbar ist aber auch, dass vor oder nach dem Einlegen der Reparaturfaserlagen diese mit einem Matrixmaterial in einem Infusionsprozess infundiert werden.

Gemäß einer Ausführungsform weist mindestens eine der Reparaturfaserlagen eine Lagendicke von weniger als 80 %, vorzugweise weniger als 60 %, besonders vorzugsweise von weniger als 40 %, der Lagendicke der Faserlagen des übrigen Faserverbundbauteils auf. So kann im besten Fall erreicht werden, dass einer Faserlage des Faserverbundbauteils mindestens 1 ½, vorzugsweise mindestens 2 oder sogar mehr Reparaturfaserlagen zugeordnet werden oder diesen entsprechen, wodurch die Reparatursteifigkeit verbessert werden kann.

Gemäß einer Ausführungsform weist mindestens eine Reparaturfaserlage, vorzugweise alle Reparaturfaserlagen, eine Lagendicke von weniger als 100 g/m², vorzugsweise weniger als 75 g/m² und besonders vorzugsweise von weniger als 50 g/m², auf.

Dem gegenüberliegend können die Faserlagen des übrigen Faserverbundbauteils gemäß einer Ausführungsform eine Lagendicke von mehr als 100 g/m², vorzugsweise mehr als 135 g/m², aufweisen.

Gemäß einer Ausführungsform werden die Reparaturfaserlagen derart in die Reparaturkavität eingebracht, dass die auf eine erste Reparaturfaserlage aufgelegte zweite Reparaturfaserlage eine von der ersten Reparaturfaserlage verschiedene Hauptfaserrichtung hat. Demzufolge unterscheidet sich die Richtung der Verstärkungsfasern (Hauptfasern) zwischen zwei aufeinanderfolgenden Reparaturfaserlagen, so dass bei zwei aufeinanderfolgenden Reparaturfaserlagen sich die Hauptfaserrichtungen unterscheiden. Aufgrund der Tatsache, dass die Reparaturfaserlagen dünner sind als die Faserlagen des Faserverbundbauteils, werden in der Reparaturkavität demnach einer Faserlage mehr als eine Reparaturfaserlage zugeordnet, wobei in der Ebene einer Faserlage des Faserverbundbauteils in der Reparaturkavität nunmehr Reparaturfaserlagen angeordnet sind, die unterschiedliche Faserrichtungen aufweisen. Hierdurch wird die Festigkeit und Steifigkeit des Reparaturpatches sowie die Lastübertragungseigenschaften innerhalb des Reparaturpatches in Bezug auf eine Faserlage deutlich verbessert. Es können aber auch zwei Reparaturfaserlagen mit der gleichen Orientierung übereinander gelegt werden.

Gemäß einer Ausführungsform hierzu können sich die Hauptfaserrichtungen durch einen Winkel von 45° oder 90° unterscheiden. Grundsätzlich können aber beliebige Winkel verwendet werden.

Gemäß einer Ausführungsform ist vorgesehen, dass ein oder mehrere Deckfaserlagen (auch Cover Ply genannt) auf die in die Reparaturkavität eingebrachten Reparaturfaserlagen aufgelegt werden. Hierdurch werden die in die Reparaturkavität eingebrachten Reparaturfaserlagen durch die Deckfaserlage abgedeckt, wobei zusätzlich eine verbesserte Lastabtragung der reparierten Stelle erzielt wird.

Dabei kann vorgesehen sein, dass zumindest eine der Deckfaserlagen, vorzugsweise die oberste Deckfaserlage, eine größere Ausdehnung als die Reparaturkavität in zumindest eine Richtung aufweist. Bevorzugterweise weist zumindest eine der Deckfaserlagen eine flächige Ausdehnung auf, die größer ist, als die Reparaturkavität an der Oberfläche des Faserverbundbauteils. Hierdurch wird sichergestellt, dass diese zumindest eine Deckfaserlage die Reparaturkavität vollständig bedeckt und dabei insbesondere im Randbereich die Reparaturkavität überlappt. Die Reparaturfaserlagen kann dabei eine größere Fläche aufweisen, als die Reparaturkavität an der Oberfläche des Faserverbundbauteils. Dabei kann vorgesehen sein, dass dieser Eigenschaft auf alle Deckfaserlagen zutrifft.

Alternativ oder zusätzlich kann auch vorgesehen sein, dass zumindest eine Deckfaserlage eine kleinere oder gleiche Lagendicke aufweist als eine der Reparaturfaserlagen in der Reparaturkavität. Bevorzugterweise weist diese Deckfaserlage eine kleinere Lagendicke auf, als sämtliche Reparaturfaserlagen in der Reparaturkavität, oder eine gleiche Lagendicke wie sämtliche Reparaturfaserlagen in der Reparaturkavität, sofern alle Reparaturfaserlagen die gleiche Lagendicke aufweisen. Hierdurch kann erreicht werden, dass der Abschluss der Reparaturkavität durch die letzte Deckfaserlage einen günstigeren Einfluss auf Statik, Aerodynamik und/oder Optik hat. Dabei kann vorgesehen sein, dass diese Eigenschaft auf alle Deckfaserlagen zutrifft.

Die Erfindung wird anhand der beigefügten Figur beispielhaft näher erläutert. Es zeigt:

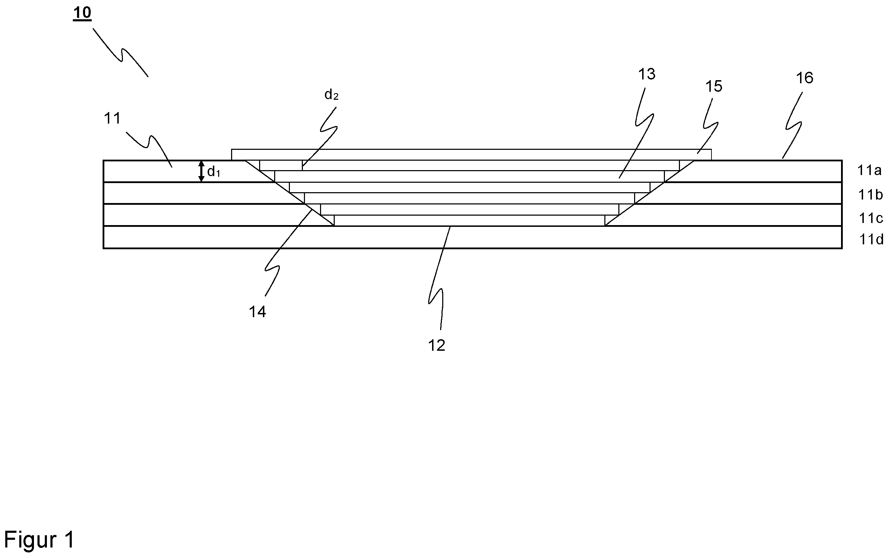

- Figur 1 -: Schematische Darstellung eines reparierten Faserverbundbauteils.

Figur 1 zeigt ein Faserverbundbauteil 10, das zu Anschauungszwecken lediglich vier Faserlagen 11 eines Fasermaterials eines Faserverbundbauteils aufweist. Die vier Faserlagen sind dabei übereinander angeordnet und durch Aushärten eines das Fasermaterial der Faserlagen 11 einbettenden Matrixmaterials zu einer integralen Einheit zusammengeführt. Jede der Faserlagen 11 weist dabei eine Hauptfaserrichtung auf, die sich von Faserlage zu Faserlage unterscheiden kann, um so in der gesamten flächigen Ebene des Faserverbundbauteils 10 eine möglichst gute lasttragende Eigenschaft zu erzielen und zumindest die Eigenschaften isotroper und anisotroper Werkstoffe anzunähern.

Das Faserverbundbauteil 10 wies nun eine Beschädigung in den ersten beiden oberen Faserlagen 11a und 11b des Faserverbundbauteils 10 auf, so dass das Faserverbundbauteil 10 repariert werden musste. Hierfür wurde durch Entfernen der Schadstelle eine Reparaturkavität 12 erzeugt, die beispielsweise durch Bohren, Schleifen oder Fräsen hergestellt werden kann. Dabei wurden die ersten drei oberen Faserlagen 11a, 11b und 11c im Bereich der Reparaturkavität 12 entfernt, um so Platz für ein entsprechendes Reparaturpatch zu bilden.

Die Reparaturkavität 12 ist dabei in Form einer Schäftung realisiert, bei der die Randbereiche in Richtung Grund der Reparaturkavität abgeschrägt sind.

In die so gebildete Reparaturkavität 12 werden nun nacheinander Reparaturfaserlagen 13 eingebracht, um die gebildete Reparaturkavität 12 wieder mit Fasermaterial zu füllen. Die Reparaturfaserlagen 13, die in die Reparaturkavität 12 eingebracht wurden, weisen dabei eine Lagendicke d₂ auf, die kleiner ist als die Lagendicke d₁ der Faserlagen 11 des Faserverbundbauteils 10.

Unter der Lagendicke einer Faserlage bzw. einer Reparaturfaserlage wird dabei die maximale Ausdehnung des Fasermaterials orthogonal zur Faserlagenebene der Faserlagen verstanden.

Aufgrund der Tatsache, dass die Reparaturfaserlagen eine geringere Lagendicke d₂ aufweisen als die Lagendicke d₁ der Faserlagen 11 des Faserverbundbauteils 10 haben, können mehr Reparaturfaserlagen 13 in die Reparaturkavität 12 eingebracht werden, als Faserlagen 11 des Faserverbundbauteils 10 im Bereich der Reparaturkavität 12 aus dem Faserverbundbauteil 10 entfernt wurden.

In einer schematisch idealisierten Form sind in Figur 1 dabei die Reparaturfaserlagen 13 derart ausgebildet, dass zwei in die Reparaturkavität 12 eingelegte Reparaturfaserlagen 13 jeweils einer Faserlage 11 des Faserverbundbauteils 10 entsprechen. Wird nun bei diesen zwei Reparaturfaserlagen 13, die einer Faserlage 11 des Faserverbundbauteils 10 zugeordnet sind, die Hauptfaserrichtung zwischen diesen beiden Reparaturfaserlagen 13 variiert, so kann in Bezug auf eine Faserlage 11 des Faserverbundbauteils 10 an der reparierten Stelle erreicht werden, dass das Patch innerhalb der Reparaturkavität 12 eine bessere lasttragende Eigenschaft erzielt und somit mögliche Nachteile der Reparatur ausgeglichen werden können.

Des Weiteren wird durch die geringere Lagendicke d₂ gegenüber den Faserlagen 11 des Faserverbundbauteils 10 erreicht, dass in dem Randbereich 14 der Treppeneffekt durch die angrenzenden Reparaturfaserlagen 13 reduziert wird, dadurch die geringere Lagendicke eine höhere Lagenauflösung im Randbereich 14 existiert. Hierdurch kann das Volumen von Harznestern bzw. Klebstoffnestern in den Randbereich 14 der Reparaturkavität 12 reduziert werden, wodurch ebenfalls die Festigkeit und Steifigkeit des Reparaturpatches erhöht werden kann.

Im Ausführungsbeispiel der Figur 1 ist des Weiteren gezeigt, dass abschließend als obere Decklage 15 ebenfalls eine Reparaturfaserlage aufgelegt wird, die an ihren Enden über die Reparaturkavität 12 hinausragt. Auch die Decklage 15 kann eine Lagendicke aufweisen, die geringer ist als die Lagendicke d₁ der Faserlagen 11 des Faserverbundbauteils, wodurch Sprünge in der äußeren Oberfläche 16 des Faserverbundbauteils verringert werden können. Dies ist besonders bei aerodynamisch umströmten Oberflächen besonders vorteilhaft, da hierdurch der Luftwiderstand reduziert werden kann.

### Bezugszeichenliste

- 10 -: Faserverbundbauteil
- 11 -: Faserlagen
- 12 -: Reparaturkavität
- 13 -: Reparaturfaserlagen
- 14 -: Randbereich
- 15 -: Decklage
- 16 -: äußere Oberfläche
- d₁ -: Lagendicke der Faserlagen 11
- d₂ -: Lagendicke der Reparaturfaserlagen 13

## Patentansprüche

1. Verfahren zum Reparieren einer Schadstelle eines Faserverbundbauteils (10), welches aus mindestens einer Faserlage (11) eines Fasermaterials eines Faserverbundwerkstoffes und einem das Fasermaterial einbettenden Matrixmaterial des Faserverbundwerkstoffes gebildet ist, wobei das Verfahren die folgenden Schritte umfasst:
- Entfernen der Schadstelle aus dem Faserverbundbauteil (10) und Herstellen einer Reparaturkavität (12) in dem Faserverbundbauteil (10),
- Einbringen von mindestens einer Reparaturfaserlage (13) eines Fasermaterials in die hergestellte Reparaturkavität (12) des Faserverbundbauteils (10), und
- Konsolidieren des das Fasermaterial der Reparaturfaserlage (13) einbettenden Matrixmaterials nach dem Einbringen der Reparaturfaserlage (13) in die Reparaturkavität (12) des Faserverbundbauteils (10),
**dadurch gekennzeichnet, dass** mindestens eine Reparaturfaserlage (13) in die Reparaturkavität (12) eingebracht wird, deren Lagendicke kleiner ist als die Lagendicke der Faserlagen (11) des übrigen Faserverbundbauteils (10).

2. Verfahren nach Anspruch 1, **dadurch gekennzeichnet, dass** die Reparaturkavität (12) in dem Faserverbundbauteil (10) durch Bildung einer Schäftung im Bereich der Schadstelle hergestellt wird.

3. Verfahren nach Anspruch 2, **dadurch gekennzeichnet, dass** die Reparaturfaserlagen (13) treppenförmig in der Reparaturkavität (12) derart angeordnet werden, dass die auf eine erste Reparaturfaserlage (13) aufgelegte zweite Reparaturfaserlage (13) eine größere Ausdehnung in wenigstens eine Richtung hat als die erste Reparaturfaserlage (13).

4. Verfahren nach einem der vorhergehenden Ansprüche, **dadurch gekennzeichnet, dass** alle in die Reparaturkavität (12) eingebrachten Reparaturfaserlagen (13) eine Lagendicke (d₂) aufweisen, die kleiner ist als die Lagendicke (d₁) der Faserlagen (11) des übrigen Faserverbundbauteils (10).

5. Verfahren nach einem der vorhergehenden Ansprüche, **dadurch gekennzeichnet, dass** mindestens eine Reparaturfaserlage (13) mit dem Matrixmaterial vorimprägniert ist oder das vor oder nach dem Einbringen der mindestens einen Reparaturfaserlage in die hergestellte Reparaturkavität das Fasermaterial mit dem Matrixmaterial infundiert wird.

6. Verfahren nach einem der vorhergehenden Ansprüche, **dadurch gekennzeichnet, dass** mindestens eine Reparaturfaserlage (13) eine Lagendicke (d₂) von weniger als 80%, vorzugsweise weniger als 60%, besonders vorzugsweise von weniger als 40% der Lagendicke (d₁) der Faserlagen (11) des übrigen Faserverbundbauteils (10) aufweist.

7. Verfahren nach einem der vorhergehenden Ansprüche, **dadurch gekennzeichnet, dass** mindestens eine Reparaturfaserlage (13) eine Lagendicke (d₂) von weniger als 100 g/m², vorzugsweise weniger als 75 g/m², besonders vorzugsweise von weniger als 50 g/m² aufweist.

8. Verfahren nach einem der vorhergehenden Ansprüche, **dadurch gekennzeichnet, dass** die Faserlagen (11) des übrigen Faserverbundbauteils (10) eine Lagendicke (d₁) von mehr als 100 g/m², vorzugsweise mehr als 135 g/m² aufweist.

9. Verfahren nach einem der vorhergenenden Arisprüche, **dadurch gekennzeichnet, dass** die Reparaturfaserlagen (13) derart in die Reparaturkavität (12) eingebracht werden, dass die auf eine erste Reparaturfaserlage (13) aufgelegte zweite Reparaturfaserlage (13) eine von der ersten Reparaturfaserlage (13) verschiedene Hauptfaserrichtung hat.

10. Verfahren nach Anspruch 9, **dadurch gekennzeichnet, dass** sich die Hauptfaserrichtung durch einen Winkel von +/- 30°, +/- 45°, +/- 60° oder 90° unterscheiden.

11. Verfahren nach einem der vorhergehenden Ansprüche, **dadurch gekennzeichnet, dass** ein oder mehrere Deckfaserlagen auf die in die Reparaturkavität eingebrachten Reparaturfaserlagen aufgelegt werden.

12. Verfahren nach Anspruch 11, **dadurch gekennzeichnet, dass** zumindest eine Deckfaserlage eine größere Ausdehnung als die Reparaturkavität in zumindest eine Richtung aufweist und/oder dass zumindest eine Deckfaserlage eine Lagendicke aufweist, die kleiner oder gleich einer Reparaturfaserlage der Reparaturkavität ist.

## Claims

1. Method for repairing a damaged area of a fiber composite component (10) which is formed from at least one fiber layer (11) of a fiber material of a fiber composite material and a matrix material of the fiber composite material embedding the fiber material, the method comprising the following steps:
- removing the damaged area from the fiber composite component (10) and producing a repair cavity (12) in the fiber composite component (10),
- inserting at least one repair fiber layer (13) of a fiber material into the repair cavity (12) produced in the fiber composite component (10), and
- consolidating the matrix material embedding the fiber material of the repair fiber layer (13) after introducing the repair fiber layer (13) into the repair cavity (12) of the fiber composite component (10),
**characterized in that** at least one repair fiber layer (13) is introduced into the repair cavity (12), the layer thickness of which is smaller than the layer thickness of the fiber layers (11) of the remaining fiber composite component (10).

2. Method according to claim 1, **characterized in that** the repair cavity (12) is produced in the fiber composite component (10) by forming a mounting in the area of the damaged area.

3. Method according to claim 2, **characterized in that** the repair fiber layers (13) are arranged in a staircase-shaped manner in the repair cavity (12) in such a way that the second repair fiber layer (13) placed on top of a first repair fiber layer (13) has a greater extension in at least one direction than the first repair fiber layer (13).

4. Method according to one of the preceding claims, **characterized in that** all repair fiber layers (13) introduced into the repair cavity (12) have a layer thickness (d₂) that is smaller than the layer thickness (d₁) of the fiber layers (11) of the remaining fiber composite component (10).

5. Method according to one of the preceding claims, **characterized in that** at least one repair fiber layer (13) is preimpregnated with the matrix material or the fiber material is infused with the matrix material before or after the at least one repair fiber layer is introduced into the repair cavity produced.

6. Method according to one of the preceding claims, **characterized in that** at least one repair fiber layer (13) has a layer thickness (d₂) of less than 80%, preferably less than 60%, particularly preferably less than 40% of the layer thickness (d₁) of the fiber layers (11) of the remaining fiber composite component (10).

7. Method according to one of the preceding claims, **characterized in that** at least one repair fiber layer (13) has a layer thickness (d₂) of less than 100 g/m², preferably less than 75 g/m², particularly preferably less than 50 g/m².

8. Method according to one of the preceding claims, **characterized in that** the fiber layers (11) of the remaining fiber composite component (10) have a layer thickness (d₁) of more than 100 g/m², preferably more than 135 g/m².

9. Method according to one of the preceding claims, **characterized in that** the repair fiber layers (13) are introduced into the repair cavity (12) in such a way that the second repair fiber layer (13) placed on top of a first repair fiber layer (13) has a main fiber direction different from that of the first repair fiber layer (13).

10. Method according to claim 9, **characterized in that** the main fiber direction differs by an angle of +/- 30°, +/- 45°, +/- 60° or 90°.

11. Method according to one of the preceding claims, **characterized in that** one or more cover fiber layers are placed on the repair fiber layers introduced into the repair cavity.

12. Method according to claim 11, **characterized in that** at least one cover fiber layer has a larger extension than the repair cavity in at least one direction and/or that at least one cover fiber layer has a layer thickness that is smaller than or equal to a repair fiber layer of the repair cavity.

## Revendications

1. Procédé de réparation d'une zone endommagée d'un composant composite à fibres (10) consistant en au moins une couche de fibres (11) d'un matériau fibreux d'un matériau composite à fibres et en un matériau matriciel du matériau composite à fibres qui incorpore le matériau fibreux, le procédé comprenant les étapes suivantes constituant à :
- retirer la zone endommagée du composant composite à fibres (10) et créer une cavité de réparation (12) dans le composant composite à fibres (10),
- insérer au moins une couche de fibres de réparation (13) d'un matériau fibreux dans la cavité de réparation (12) du composant composite à fibres (10), et
- consolider le matériau matriciel incorporant le matériau fibreux de la couche de fibres de réparation (13) après avoir inséré la couche de fibres de réparation (13) dans la cavité de réparation (12) du composant composite à fibres (10),
**caractérisé en ce qu'**au moins une couche de fibres de réparation (13) est insérée dans la cavité de réparation (12), dont l'épaisseur de couche est inférieure à l'épaisseur de couche des couches de fibres (11) du reste du composant composite à fibres (10).

2. Procédé selon la revendication 1,
**caractérisé en ce que** la cavité de réparation (12) dans le composant composite à fibres (10) est créée par la formation d'un biseau au niveau de la zone endommagée.

3. Procédé selon la revendication 2,
**caractérisé en ce que** les couches de fibres de réparation (13) sont disposées en gradins dans la cavité de réparation (12), de sorte que la deuxième couche de fibres de réparation (13), posée sur une première couche de fibres de réparation (13), présente une extension supérieure, dans au moins une direction, à celle de la première couche de fibres de réparation (13).

4. Procédé selon l'une des revendications précédentes,
**caractérisé en ce que** toutes les couches de fibres de réparation (13) insérées dans la cavité de réparation (12) présentent une épaisseur de couche (d₂) inférieure à l'épaisseur de couche (d₁) des couches de fibres (11) du reste du composant composite à fibres (10).

5. Procédé selon l'une des revendications précédentes,
**caractérisé en ce qu'**au moins une couche de fibres de réparation (13) est pré-imprégnée du matériau matriciel, ou **en ce que** le matériau fibreux est infusé du matériau matriciel, avant ou après l'insertion de ladite au moins une couche de fibres de réparation dans la cavité de réparation créée.

6. Procédé selon l'une des revendications précédentes,
**caractérisé en ce qu'**au moins une couche de fibres de réparation (13) présente une épaisseur de couche (d₂) inférieure à 80 %, de préférence inférieure à 60 %, et de manière particulièrement préférée inférieure à 40 % de l'épaisseur de couche (d₁) des couches de fibres (11) du reste du composant composite à fibres (10).

7. Procédé selon l'une des revendications précédentes,
**caractérisé en ce qu'**au moins une couche de fibres de réparation (13) présente une épaisseur de couche (d₂) inférieure à 100 g/m², de préférence inférieure à 75 g/m², et de manière particulièrement préférée inférieure à 50 g/m².

8. Procédé selon l'une des revendications précédentes,
**caractérisé en ce que** les couches de fibres (11) du reste du composant composite à fibres (10) présentent une épaisseur de couche (d₁) supérieure à 100 g/m², de préférence supérieure à 135 g/m².

9. Procédé selon l'une des revendications précédentes,
**caractérisé en ce que** les couches de fibres de réparation (13) sont insérées dans la cavité de réparation (12) de telle sorte que la deuxième couche de fibres de réparation (13) posée sur une première couche de fibres de réparation (13) présente une direction principale des fibres différente de celle de la première couche de fibres de réparation (13).

10. Procédé selon la revendication 9,
**caractérisé en ce que** les directions principales des fibres diffèrent les unes des autres par un angle de +/- 30°, +/- 45°, +/- 60° ou 90°.

11. Procédé selon l'une des revendications précédentes,
**caractérisé en ce qu'**une ou plusieurs couches de fibres de recouvrement sont posées sur les couches de fibres de réparation insérées dans la cavité de réparation.

12. Procédé selon la revendication 11,
**caractérisé en ce qu'**au moins une couche de fibres de recouvrement présente une extension supérieure à celle de la cavité de réparation dans au moins une direction, et/ou **en ce qu'**au moins une couche de fibres de recouvrement présente une épaisseur de couche inférieure ou égale à celle d'une la couche de fibres de réparation de la cavité de réparation.
